## Europäisches Patentamt

## European Patent Office

## Office européen des brevets

(19)

(11) Veröffentlichungsnummer: **0 160 888 B1**

(12)

# EUROPÄISCHE PATENTSCHRIFT

(45) Veröffentlichungstag der Patentschrift:
**22.03.89**

(51) Int. Cl.⁴: **G 01 N 27/64**

(21) Anmeldenummer: **85104994.0**

(22) Anmeldetag: **25.04.85**

(54) Vorrichtung zur quantitativen und qualitativen Erfassung von Kohlenwasserstoffhaltigen Schwebeteilchen in Gasen.

(30) Priorität: **11.05.84 DE 3417525**

(43) Veröffentlichungstag der Anmeldung:
**13.11.85 Patentblatt 85/46**

(45) Bekanntmachung des Hinweises auf die Patenterteilung:
**22.03.89 Patentblatt 89/12**

(84) Benannte Vertragsstaaten:
**AT BE CH DE FR GB IT LI LU NL SE**

(56) Entgegenhaltungen:
**EP-A- 0 147 521**
**GB-A- 1 553 071**
**US-A- 3 881 111**
**US-A- 4 304 124**

**JOURNAL OF APPLIED PHYSICS, Band 53, Nr. 5, Mai 1982, Seiten 3787-3791, American Institute of Physics; H. BURTSCHER et al.: "Probing aerosols by photoelectric charging"**

(73) Patentinhaber: **Matter + Siegmann AG, Obere Haldenstrasse 65, CH-5610 Wohlen (CH)**

(72) Erfinder: **Burtscher, Heinz, Dr., Zimmergasse 5, CH-8008 Zürich (CH)**
Erfinder: **Siegmann, Hans-Christoph, Prof. Dr., Kürbergstrasse 24, CH-8049 Zürich (CH)**
Erfinder: **Schmidt-Ott, Andreas, Dr., Kürbergsteig 7, CH-8049 Zürich (CH)**

(74) Vertreter: **Lauer, Joachim, Hug Interlizenz AG Austrasse 44 Postfach, CH-8045 Zürich (CH)**

**Beschreibung**

Die vorliegende Erfindung betrifft eine Vorrichtung zur quantitativen und qualitativen Erfassung von kohlenwasserstoffhaltigen Schwebeteilchen in Gasen gemäß dem Oberbegriff des Patentanspruches 1.

Bei der Verbrennung von Holz, Kohle, Erdgas, Erdöl und anderen Stoffen sowie beim Rauchen von Zigaretten gelangen nicht-brennbare Rückstände in Form von mehr oder weniger feinen Schwebeteilchen in die Atmosphäre. Führt man der Verbrennung zu wenig Sauerstoff zu, oder ist die Verbrennung grundsätzlich so geführt, daß Sauerstoffmangel herrscht, wie z.B. bei der Diffusionsflamme des Holzfeuers oder beim Glimmbrand der Zigarette, so entstehen zusätzlich Kohle (Ruß), Kohlenmonoxyd und Kohlenwasserstoffe. Im heißen Teil der Verbrennung bildet sich dabei der Kern der Schwebeteilchen aus Kohle oder Asche. Beim Abkühlen der Abgase der Verbrennung kondensieren auf der Oberfläche dieser Kerne die Kohlenwasserstoffe, falls sie wegen ungenügender Sauerstoffzufuhr vorhanden sind. Die chemischen und toxischen Eigenschaften der Schwebeteilchen, ihre Fähigkeit, als Kondensationskeime zu wirken und ihre Rolle in der Bildung photochemischen Smogs, werden praktisch nur von der Oberfläche bestimmt, während die Diffusion sowie die Abscheidungswahrscheinlichkeit in einem Filter von der Größe des Trägerkerns abhängt.

Die größenmäßige Charakterisierung von Aerosolen, also im Gas suspendierter Schwebeteilchen, ist heute technisch recht gut gelöst. Sie geschieht meist über die Messung der Diffusionskonstanten oder der elektrischen Beweglichkeit geladener Teilchen.

Im Gegensatz dazu stößt die chemische Klassifizierung von Schwebeteilchen auf große Schwierigkeiten. Eine chemische Charakterisierung ist nur an niedergeschlagenen Teilchen möglich, wobei insbesondere die wichtige Information darüber, welche Substanzen sich an der Oberfläche der Teilchen befindet, verloren geht. Das Gemisch von höheren Kohlenwasserstoffen (Teer), das bei Verbrennungen entsteht und auf der Teilchenoberfläche kondensiert, enthält carzinogene und andere toxische Verbindungen, die zwar nur in sehr kleinen Mengen vorhanden sind, aber eine große Aktivität entfalten können, da sie an der Oberfläche exponiert sind.

Eine oberflächenempfindliche Methode zur Charakterisierung solcher Teilchen wird also dringend benötigt, zumal sie als Automobil- und Industrieabgase den größten Teil der partikelförmigen Luftverschmutzung ausmachen. Unter den Kohlenwasserstoffen aus Verbrennungen sind stets solche, die als Oberflächenbedeckungen oder Adsorbate die Tendenz haben, leicht Elektronen abzugeben. Diese Eigenschaft verleiht ihnen hohe chemische Aktivität und eine niedrige Austrittsarbeit, d.h. sie zeigen einen starken photoelektrischen Effekt.

Der photoelektrische Effekt an atmosphärischen Schwebeteilchen wurde 1981 zum ersten Mal systematisch beobachtet und in der Veröffentlichung H. Burtscher et al, Appl. Phys. 53, 3787, (1982) beschrieben. In der hierfür benutzten Apparatur der eingangs genannten Art, strömt die Luft an einer ozonfreien Ultraviolett – Niederdrucklampe vorbei, wobei photoelektrisch aktive Teilchen Elektronen emittieren und sich dadurch positiv aufladen. Die Ladung auf diesen Teilchen erzeugt in einem nachgeschalteten Filter einen Strom, der ein Maß für die photoelektrische Aktivität des Aerosols ist. Die in der genannten Publikation geäußerte Vermutung, daß die in der Atmosphäre gemessenen teilchen hoher photoelektrischer Aktivität kohlenwasserstoffhaltig seien, hat sich in späteren Untersuchungen bestätigt.

In der älteren, jedoch nachveröffentlichten EP-A-0 147 521 wird eine Vorrichtung zur Regelung von Verbrennungsprozessen beschrieben mit einer geschlossenen Kammer, welche ein Gaseinlaß und einen Gausauslaß aufweist, mit einer UV-Lichtquelle, welche einen Teil des Kammerinnern ausleuchtet, wobei dieser ausgeleuchtete Teil der Kammer durch gasdurchlässige Lichtschleusen vom Rest des Kammerinnern abgetrennt ist, und mit einer im Bereich des Gaseinlasses im Kammerinnern angeordneten Einrichtung zur elektrischen Neutralisierung des teilchenhaltigen Gases sowie mit einer im Bereich des Gasauslasses im Kammerinnern angeordneten Sammelelektrode für geladene Teilchen, die an ein elektrisches Strom,- oder Ladungsmeßgerät angeschlossen ist, wobei die Kammer (3, 23) mit einem Gebläse (9, 29) versehen ist, welches eine Luftströmung vom Gaseinlaß (1, 21) durch die Kammer (3, 23) hindurch zum Gasauslaß (2, 22) erzeugt, wobei die Sammelelektrode (10a, 10b, 20a, 44) mittels Isolatoren (12a, 12b, 22a, 22b, 46) an der Kammerwand befestigt und mittels einer elektrostatischen Abschirmung (13a, 13b, 27) von der UV-Lichtquelle (4, 24) sowie vom Gebläse (9, 29) abgeschirmt ist, und wobei der ausgeleuchtete Teil (14, 34) des Kammerinnern teilweise eine Innenwand (5) besitzt, die an ein definiertes elektrisches Potential angeschlossen ist und eine Leitfähigkeit besitzt, die groß genug ist, um die Ladung der durch die Photoemission entstandenen Kleinionen, die zur Innenwand wandern, auf das definierte elektrische Potential abzuleiten.

Aus der US-A-4 304 124 ist eine Vorrichtung zum Nachweis von Aerosolen in einem Gasstrom bekannt. Es ist eine UV-Lichtquelle vorgesehen, durch welche der Gasstrom und/oder ein im Gasstrom angeordnetes photosensitives Material bestrahlt wird. Ein erster, an eine Hochspannung angeschlossener Kollektor entfernt durch die UV-Bestrahlung erzeugte Ionen einer Polarität aus dem Gasstrom, ein Zweiter, dem ersten in Strömungsrichtung nachgeordneter Kollektor neutralisiert die Jonen der anderen Polarität im Gasstrom. Gemessen wird der Strom am zweiten Kollektor. Abhängig von der Energie des verwendeten UV-Lichtes werden durch das photosensitive Material Elektronen freigesetzt, die Aerosolpartikel selbst und/oder Gasmoleküle des Gasstroms ionisiert. Im erstgenannten und letztgenannten Fall beruht der Nachweis der Aerosole auf dem Einfang von freien Elektronen im Gasstrom durch die Aerosole.

An der GB-A-1 553 071 ist eine auf dem Drittkammerprinzip beruhende Vorrichtung zum Nachweis von Gasen mit hoher Elektronenaffinität bekannt. Die nachzuweisenden Gase werden nicht positiv ionisiert sondern im Gegenteil durch Anlagerung freier Elektronen negativ geladen. Die dazu erforderlichen freien Elektronen werden durch Bestrahlen eines photosensitiven Materials mit UV-Licht erzeugt.

Aus der US-A-3 881 111 ist ein Verfahren und eine Vorrichtung zum qualitativen und quantitativen Nachweis von Stickoxiden mittels Photoionisierung durch UV-Strahlung bekannt. Die verwendete UV-Lichtquelle emittiert UV-Strahlen im Wellenlängenbereich zwischen 1,200 und 1,300A. Die erzeugten Stickoxidionen werden mittels eines Ionen-Detektor-Systems nachgewiesen. Zur Erfassung von kohlenwasserstoffhaltigen Schwebeteilchen ist das bekannte Verfahren und die bekannte Vorrichtung insbesondere wegen der zu kurzen Wellenlänge der UV-Strahlung ungeeignet.

Ausgehend vom vorerwähnten Stand der Technik, insbesondere gemäß der Veröffentlichung von H. Burtscher et al. wurde nun gefunden, daß das Prinzip der photoelektrischen Aufladung in einem Gerät zur Detektion teerhaltiger Teilchen oder Bestimmung der Dosis der Umweltbelastung durch solche chemisch aktiven Teilchen Anwendung finden kann. Es ist demzufolge eine Aufgabe der Erfindung, mit Hilfe von neu dazugewonnenen Erkenntnissen die eingangs genannte Vorrichtung so weiterzubilden, daß ein in Wartung und Handhabung unproblematisches und bei jeder Witterung einsetzbares Gerät zur Verfügung steht, das, obwohl in handlicher Größe konstruierbar, eine so hohe Empfindlichkeit besitzt, daß kohlenwasserstoffhaltige Teilchen auch in der «reinsten» Luft noch detektivbar sind: Man erreicht eine Detektionsgrenze von etwa 10 Teilchen pro cm für Teilchen zwischen 5 und 10 nm im Durchmesser. Die Messung ist besonders empfindlich für den Größenbereich der lungengängigen Teilchen. Für Teilchen größer als 10 nm nimmt die Empfindlichkeit ab, da das Photoelektron eine hohe Wahrscheinlichkeit hat, zum Teilchen zurückzudiffundieren.

Die vorgenannte Aufgabe wird bei der gattungsgemäßen Vorrichtung erfindungsgemäß durch die im Anspruch 1 angegebenen Merkmale gelöst. Besondere Ausführungsformen und Weiterbildungen des Erfindungsgegenstandes sind in den abhängigen Ansprüchen definiert.

Neben der Anwendung als Gerät für die Messung der Außenluftverschmutzung oder der Verschmutzung der Luft am Arbeitsplatz durch industrielle Prozesse, sind auch Anwendungen für die Charakterisierung künstlich erzeugter Aerosole im Labor möglich. Als Trägergase kommen daher auch andere Gase als Luft in Frage.

Im folgenden werden Ausführungsbeispiele des Erfindungsgegenstandes, unter Bezugnahme auf die beiliegenden Zeichnungen, näher erläutert. Es zeigen:

Fig. 1 einen schematischen Längsschnitt durch ein erstes Ausführungsbeispiel,

Fig. 2 einen schematischen Längsschnitt durch ein zweites Ausführungsbeispiel, und

Fig. 3 einen schematischen Teilschnitt durch eine Variante.

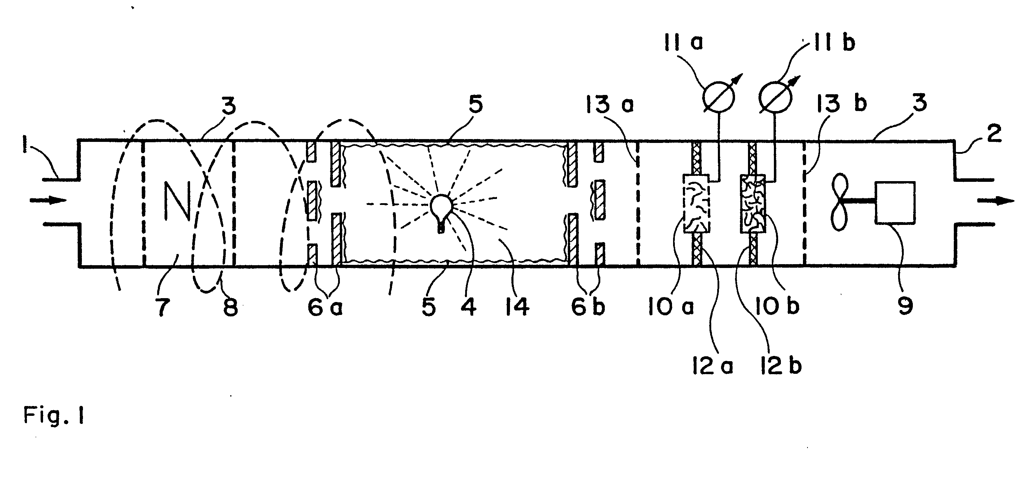

Gemäß Fig. 1 strömt das Trägergas mit dem zu untersuchenden Aerosol vom Gaseinlaß 1 zum Gasauslaß 2 durch eine Kammer 3. Im Inneren der Kammer 3 ist eine Ultraviolett-Lampe 4 angeordnet. Sie strahlt in einem Wellenlängenbereich bzw. mit Photoenergien, die unterhalb der Ionisierungsenergie des Trägergases und oberhalb der Austrittsarbeit der zu detektierenden Teilchen liegen. Sie hat ferner die Eigenschaft, daß sie photochemische Reaktionen, die die Oberfläche der Teilchen chemisch verändern, nicht auslöst. Solche Reaktionen würden die Messung verfälschen. Wenn Luft als Trägergas dient, erfüllen im Handel erhältliche, ozonfreie Niederdrucklampen diese Bedingung. Eine andere Möglichkeit, photochemische Reaktionen zu unterdrücken, besteht in der Verwendung einer Blitzlampe, z.B. eine Xenon-Hochdrucklampe. Solche Lampen erzeugen eine sehr intensive Strahlung während einer kurzen Blitzdauer. Eine Blitzdauer von 1 ms ist aber schon zu kurz, um längere Ketten photochemischer Reaktionen in der Gasphase oder zwischen Gas und Teilchenoberfläche zu erlauben.

Die Lampe leuchtet einen Raum 14 aus, der durch den beleuchteten Teil der Kammerwand 5 und die Lichtsperren 6a und 6b begrenzt ist. Der beleuchtete Teil der Kammerwand 5, sowie die der Strahlung ausgesetzten Stellen der Lichtsperren 6a und 6b sind so beschaffen, daß die unter der Strahlung nicht photoemittieren, da eine Freisetzung zusätzlicher Photoelektronen zur Folge hätte, daß sich diese Elektronen, bzw. die im Gas aus ihnen gebildeten negativen Ionen, an Teilchen anlagern und die positive Aufladung durch Photoemission kompensieren oder überkompensieren würden.

Die von den Teilchen emittierten Elektronen wandern aufgrund ihrer hohen Diffusionskonstante zur Wand. Die Kammerwand 5 in der beleuchteten Zone 14 muß daher als zweite geforderte Eigenschaft mindestens stellenweise eine Leitfähigkeit besitzen, die einen Abtransport der zu ihr diffundierenden Ladungen erlaubt. Ohne diese Eigenschaft würden durch die sich ansammelnde negative Ladung in der beleuchteten Zone 14 unkontrollierte elektrische Felder entstehen, die die Teilchenaufladung durch Photoemission in unvorhersagbarer Weise beeinflussen. Die Photoemission von der Kammerwand kann verhindert werden durch eine Beschichtung mit isolierendem Material, z.B. einem Lack- oder Fettbelag. Wird dieses Material dünn genug auf die leitende Kammerwand aufgetragen (z.B. Dicke 1 um), so bleibt der Ladungstransport durch die Schicht hindurch in genügendem Maße gewährleistet.

Vor der photoelektrischen Aufladung durchströmt das Aerosol einen Neutralisator 7, in dem eine definierte Ausgangsverteilung der Teilchenladungen vor der Photoemission etabliert wird. Eine Möglichkeit, den Neutralisator 7 zu realisieren, besteht darin, das Aerosol mit einer hohen Anzahl gleichvieler positiver und negativer Kleinionen anzureichern. Diese lagern sich dann nach Gesetzen der Wahrscheinlichkeit an die Teilchen an, und eine definierte Ladungsverteilung wird hergestellt. In Luft geschieht dies am einfachsten mit Hilfe einer radioaktiven Strahlungsquelle, die die Luft in genügendem Maße ionisiert. Eine andere Möglichkeit besteht darin, durch ein elektrisches Feld alle geladenen Teilchen aus dem Aerosol zu entfernen.

Die Heizung 8, in der Figur 1 durch eine Heizspirale symbolisiert, hat den Zweck, die relative Luftfeuchtigkeit des Aerosols herabzusetzen. Dadurch wird eine Kondensation von Wasser in der Kammer 3, die sich insbesondere auf den Isolatoren der Sammelelektroden signalverfälschend auswirken kann, verhindert. Zudem wird eine eventuell vorhandene Wasserbedeckung der Teilchen beseitigt. Insbesondere bleibt so bei Außenmessungen der Meßwert unbeeinflußt von der Luftfeuchtigkeit. Wenn die Wärmeentwicklung durch die Lampe 4 groß genug ist, kann auch die Lampe selbst als Heizung dienen. Das setzt voraus, daß die Wärmeableitung durch das Gehäuse an die Umgebung klein ist gegenüber der durch die Lampe 4 erzeugten Wärme. Eine Kammer 3 aus rostfreiem Stahl hat beispielsweise eine relativ geringe Wärmeleitfähigkeit.

Das Gebläse 9 sorgt für die Strömung des Aerosols vom Gaseinlaß 1 zum Gasauslaß 2. Vorteilhafterweise wird ein geräusch- und erschütterungsfreier Ventilator verwendet, der regelbar ist, um die Strömung durch die Kammer 3 hindurch einzustellen.

Hinter der photoelektrischen Aufladung wird ein Teil der geladenen Teilchen auf einer Sammelelektrode 10a aufgefangen, wo sie ihre Ladung abgeben. Der dadurch hervorgerufene Strom wird in einem empfindlichen Strommeßgerät 11a gemessen. Die Sammelelektrode 10a besteht aus einem größenselektiven Filter. Dieses ist ein Knäuel oder Gewebe von Fasern in einem durchlöcherten Metallgehäuse. Es ist mittels eines Isolatorrings 12a so im Gehäuse angebracht, daß die Strömung durch das größenselektive Filter verläuft. Die Wahrscheinlichkeit, daß sich ein Teilchen im Filter abscheidet, wird durch seine Diffusionskonstante bestimmt, die wiederum von der Teilchengröße abhängt. Kleine Teilchen diffundieren schneller und haben demzufolge eine höhere Wahrscheinlichkeit, im Filter zurückgehalten zu werden. Je größer der Weg ist, den die Strömung durch das Faserfilter zurücklegen muß, und je enger die Fasern aneinanderliegen, desto größer ist die Abscheidungswahrscheinlichkeit. Außer der Diffusion kann dabei auch die träge Masse der Teilchen eine Rolle spielen. Durch die Geometrie des Filters wird also die größenabhängige Durchlaß- bzw. Abscheidungscharakteristik bestimmt.

Das Filter kann beispielsweise so ausgelegt sein, daß die Durchlaßcharakteristik derjenigen der menschlichen Lunge entspricht. Das Signal des Strommeßgeräts 11a entspricht dann der Menge der kohlenwasserstoffhaltigen, lungengängigen Teilchen.

Durch eine Sequenz mehrerer, immer feiner werdenden Filter kann auch die Abscheidung in verschiedenen Zonen der Atemwege simuliert werden. Im vorliegenden Beispiel folgt als zweite Sammelelektrode 10b ein zweites Faserfilter, welches so fein ist, dass es alle verbleibenden Partikel abscheidet. Der zugehörige Strom wird im Strommeßgerät 11b gemessen. Die Faserfilter können aus metallischen Drähten bestehen, die zu Gittern geflochten sein können. Es ist jedoch nicht erforderlich, leitende Fasern zu verwenden. Filter aus Zellulose- oder Kunststoffgeweben, wie sie beispielsweise als Atemfilter verwendet werden, erfüllen denselben Zweck, wenn sie in ein metallisches, durchlöchertes Gehäuse (Faradaykäfig) eingebaut werden.

Anstelle von Faserfiltern können als größenselektive Filter auch Diffusionsbatterien verwendet werden. Eine Diffusionsbatterie besteht beispielsweise aus einer Anzahl paralleler Platten, die einen Abstand von der Größenordnung 1 mm haben, zwischen denen das Aerosol strömen kann. Es ist auch möglich, vor dem ersten als Sammelelektrode verwendeten Filter ein weiteres größenselektives Filter anzubringen, das nicht als Sammelelektrode verwendet wird, also nicht vom Gehäuse isoliert und nicht an ein Strommeßgerät angeschlossen ist.

Die Isolatorringe 12a und 12b müßen eine Oberfläche haben, die wasserabstossend ist. Das bedeutet, sie dürfen sich nicht von Wasser benetzen lassen oder gar hygroskopisch sein. Dies würde eine Oberflächenleitfähigkeit zur Folge haben, die abhängig von der relativen Feuchtigkeit des Aerosols ist. Zuverlässige, feuchtigkeitsunabhängige Messungen wurden mit Teflonisolatoren oder mit teflonbeschichteten Glas- oder Keramikkörpern erzielt.

Die elektrostatischen Abschirmgitter 13a und 13b schirmen die Sammelelektroden 10a und 10b von Störungen ab, die vom Gebläse 9 oder von der Lampe 4 herrühren.

Zur Interpretation des Meßwerts ist folgendes zu beachten: Die gemessenen Ströme bzw. Ladungen hängen unter anderem von der Effizienz der photoelektrischen Aufladung ab. Diese ist eine Funktion der Zeit, während der die Teilchen in der ausgeleuchteten Zone bestrahlt werden, ist also abhängig von der Strömungsgeschwindigkeit. Die Anzahl der von einem Teilchen photoemittierten Elektronen ist für kurze Bestrahlungszeit proportional zur Emissionsrate und zur Bestrahlungszeit (linearer Bereich). Ein Teilchen, das schon einige Elektronen emittiert hat, emittiert weitere nicht mehr so leicht wie die ersten, weil seine positive Ladung über die Coulombkraft der Elektronenemission entgegenwirkt. Das hat zur Folge, daß die Teilchen bei langer Bestrahlung eine Maximalladung annehmen (Sättigung). Durch die Strömungsgeschwindigkeit kann der gewünschte Bereich (linearer Bereich, Zwischenbereich oder Sättigung) eingestellt werden. Im linearen Bereich ist das Signal ein Maß für die photoelektrische Aktivität des Aerosols, während das Signal in Sättigung die mit einem größenabhängigen Faktor (Maximalladung) gewichtete Gesamtzahl der teerbedeckten teilchen angibt.

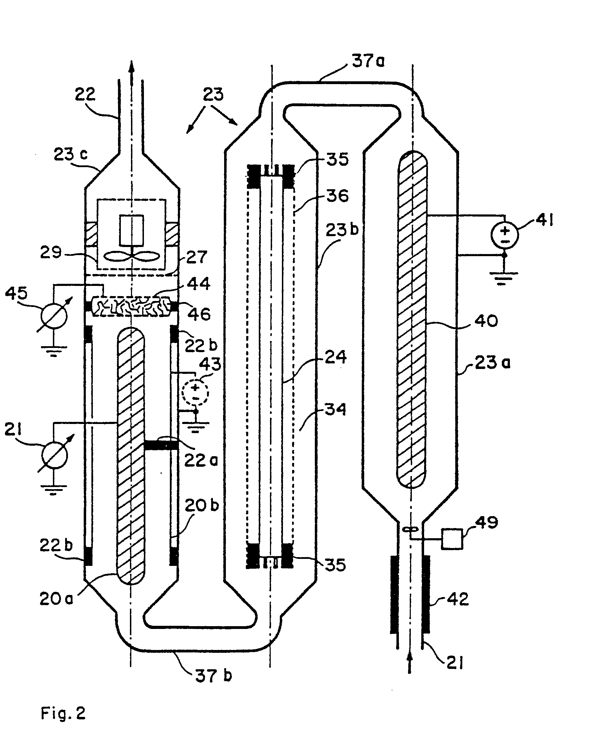

Fig. 2 zeigt eine weitere Möglichkeit, das erfindungsgemäße Gerät zu realisieren. Die Kammer 23 ist in drei zylindrische Zonen 23a, 23b und 23c aufgeteilt. Die Strömung fließt vom Einlaß 21 zum Auslaß 22. In der mittleren Zone 23b befindet sich axial angeordnet eine stabförmige Lampe 24. Es ist eine ozonfreie Quecksilber-Niederdrucklampe, die mit einer Wellenlänge von 254 nm strahlt. Um die Lampe herum ist mittels Isolationsringen 35 ein Drahtgitter 36 angebracht. Das Gitter verhindert, daß eratische elektrische Felder, verursacht durch Aufladung des Glases der Lampe 24, in den Bereich der Strömung eindringen. Durch Anlegen einer Spannung an das Gitter 36 kann ein radiales elektrisches Feld in der beleuchteten Zone 34 erzeugt werden. Beim Anlegen einer kleinen Spannung (ca. 10 V) werden bei einer typischen Strömungsgeschwindigkeit (einige cm pro Sekunde) alle Photoelektronen, bzw. die aus ihnen gebildeten negativen Ionen, aus dem Aerosol entfernt, ohne daß die sehr viel unbeweglicheren geladenen Teilchen entfernt werden. Die auf diese Weise erreichte Reduktion der Lebensdauer der negativen Ladungsträger erhöht die Effizienz der Aufladung, da die Wahrscheinlichkeit der Wiederanlagerung am Teilchen verhindert wird.

Derselbe Effekt kann durch Anlegen einer Wechselspannung erreicht werden, wenn das Verhältnis zwischen Spannung und Frequenz so gewählt wird, daß die Ionen in einer Halbperiode am Gitter oder an der Kammerwand abgeschieden werden, währenddem die geladenen Teilchen nur eine Zitterbewegung ausführen. Die innere Kammerwand in der ausgeleuchteten Zone 34 sowie das Gitter 36 sind mit einer dünnen Schicht aus isolierendem Lack beschichtet, um Photoemission zu vermeiden.

Beiderseits der mittleren Zone verengt sich die Kammer und geht in die gebogenen Röhren 37a und 37b über, die an ihrer Innenwand mit einem nicht-reflektierenden Material beschichtet sind. Sie dienen als Lichtsperren und verhindern die Photoemission an den folgenden Komponenten. Die Verengung 37b bietet zugleich eine genügende elektrostatische Abschirmung der folgenden Sammelelektrode 20a. Diese ist mit einem teflonbeschichteten Keramikstab 22a am Gehäuse 23c befestigt. Die Sammelelektrode 20a ist mit dem Strommeßgerät 21 verbunden. Eine zylinderförmige Elektrode 20b ist mittels zweier Isolationsringe 22b in der Kammer 23c gehaltert und bildet mit der Sammelelektrode 20a einen Kondensator. Die Elektrode 20b ist an eine sehr gut stabilisierte positive Spannungsquelle 43 (z.B. eine 100 V-Batterie) angeschlossen. Hinter dem Kondensator folgt ein Faserfilter 44 als zweite Sammelelektrode. Sie ist an das Strommeßgerät 45 angeschlossen und mit einem teflonbeschichteten Glasring 46 an der Kammer 23c gehalten. Sie wird durch ein Abschirmungsgitter 27 vom Gebläse 29 abgeschirmt.

Die Spannung an der Elektrode 20b wird so eingestellt, daß nur die kleineren Teilchen, also die Teilchen höherer elektrischer Beweglichkeit, an der Sammelelektrode 20a abgeschieden werden. Der Kondensator wirkt also als größenselektives Elektrofilter. Das Faserfilter 44 ist so fein, daß alle restlichen Teilchen in ihm gesammelt werden. Der Strom im Meßgerät 21 entspricht somit der Anzahl der kleineren Teilchen und der Strom im Meßgerät 45 der Anzahl der größeren.

Hinter dem Lufteinlass 21 ist ein strömungsmeßgerät 49 angebracht. Mit seiner Hilfe kann durch Variation der Gebläseleistung eine gewünschte Strömungsgeschwindigkeit eingestellt werden.

Die Elektrode 40 bildet mit der Kammer 23a einen Kondensator, der als Neutralisator dient. Die an die Elektrode 40 angeschlossene Hochspannungsquelle 41 kann so eingestellt werden, daß praktisch alle geladenen Teilchen im Kondensator beseitigt werden.

Eine Heizung 42 heizt das in die Kammer hineinströmende Aerosol um einige Grad auf, um die relative Luftfeuchtigkeit herabzusetzen.

Das Gerät in Fig. 2 ist kompakt und tragbar konstruierbar und besonders geeignet für die Messung der Luftverschmutzung durch Teerteilchen. Zwei Größenklassen werden separat angezeigt. Die Spannungsquelle 43 kann beispielsweise so eingestellt werden, daß das Strommeßgerät 21 den Strom der teerbedeckten Teilchen mit Durchmessern von 10 bis 100 nm anzeigt, und das Strommeßgerät 45 den Strom derjenigen, die 100 bis 1000 nm groß sind.

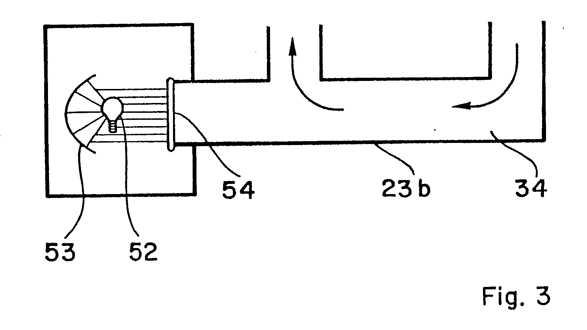

In Figur 3 ist eine Möglichkeit der Realisierung des Teils der Kammer 23b skizziert, der die ausgeleuchtete Zone 34 einschließt. Die Lampe 52 und ein sphärischer Spiegel 53 sind durch ein Quarzfenster 54 von der durch Pfeile angedeuteten Gasströmung geschützt. Der Spiegel 53 erzeugt ein weitgehend paralleles Lichtbündel in der durchströmten Zone.

Strom- und Ladungsmeßgeräte mit der benötigten Empfindlichkeit weisen mehr oder weniger starke Langzeitschwankungen des Nullpunkts auf (drift). Wenn die Meßgröße klein ist im Vergleich zu diesen Schwankungen, ist es daher notwendig, bei der Messung immer wieder das «Nullsignal» festzustellen. Das kann durch Ausschalten der Lampe geschehen oder dadurch, daß vor den Sammelelektroden ein Elektrofilter eingeschaltet wird, daß alle geladenen Teilchen entfernt. Die Differenz zwischen den beiden Anzeigen ist dann der eigentliche Meßwert.

Zudem sind mittelwertfreie Schwankungen des Meßwerts, verursacht durch Störungen, Rauschen von elektronischen Komponenten oder Schwankungen in der Aerosolteilchenkonzentration, nicht zu vermeiden. Solche Schwankungen können durch Bildung des zeitlichen Mittelwerts vermindert werden. Im sogenannten Lock-in-Verfahren wird die Differenzbildung durch Umpolung im Takt des wiederholten Ein- und Ausschaltens und der nachfolgenden Bildung des zeitlichen Mittelwerts erreicht. Anders ausgedrückt, das Signal wird mit dem Takt des Schaltvorgangs korreliert und der zeitliche Mittelwert gebildet. Da zwischen dem Strömen des Aerosols durch das geschaltete Element (Lampenraum oder Elektrofilter) und der Sammelelektrode Zeit vergeht, muß die Korrelation mit der entsprechenden Phasenverschiebung erfolgen.

**Patentansprüche**

1. Vorrichtung zur quantitativen und qualitativen Erfassung von kohlenwasserstoffhaltigen Schwebeteilchen in Gasen mit einer geschlossenen Kammer, welche einen Gaseinlaß und einen Gasauslaß aufweist, mit einer UV-Lichtquelle, welche einen Teil des Kammerinnern ausleuchtet, wobei dieser ausgeleuchtete Teil der Kammer durch gasdurchlässige Lichtschleusen vom Rest des Kammerinnern abgetrennt ist, und mit einer im Bereich des Gaseinlasses im Kammerinnern angeordneten Einrichtung zur elektrischen Neutralisierung des teilchenhaltigen Gases sowie mit mindestens einer im Bereich des Gasauslasses im Kammerinnern angeordneten Sammelelektrode für geladene Teilchen, die an ein elektrisches Strom- oder Ladungsmeßgerät angeschlossen ist, dadurch gekennzeichnet, daß die Kammer (3, 23) mit einem Gebläse (9, 29) versehen ist, welches eine einstellbare Gasströmung vom Gaseinlaß (1, 21) durch die Kammer (3, 23) hindurch zum Gasauslaß (2, 22) erzeugt, daß die Sammelelektrode (10a, 10b, 20a, 44) mittels wasserabstossenden Isolatoren (12a, 12b, 22a, 22b, 46) an der Kammerwand befestigt und mittels mindestens einer elektrostatischen Abschirmung (13a, 13b, 27) von der UV-Lichtquelle (4, 24) sowie vom Gebläse (9, 29) abgeschirmt ist, daß der ausgeleuchtete Teil (14, 34) des Kammerinnern mindestens teilweise eine Innenwand (5) besitzt, die an ein definiertes elektrisches Potential angeschlossen ist und eine Leitfähigkeit besitzt, die groß genug ist, um die Ladung der durch die Photoemission entstandenen Kleinionen, die zur Innenwand wandern, auf das definierte elektrische Potential abzuleiten und daß die UV-Lichtquelle mit Photoenergien unterhalb der Ionisierungsenergie des Trägergases und oberhalb der Austrittsarbeit der Teilchen strahlt.

2. Vorrichtung nach Anspruch 1, dadurch gekennzeichnet, daß die UV-Lichtquelle (4, 24) mit Photoenergien unterhalb der Ionisierungsenergie von Luft und oberhalb der Austrittsarbeit der Teilchen strahlt.

3. Vorrichtung nach Anspruch 2, dadurch gekennzeichnet, daß die UV-Lichtquelle (4, 24) nur mit Wellenlängen oberhalb von 190 nm strahlt.

4. Vorrichtung nach einem der Ansprüche 1 bis 3, dadurch gekennzeichnet, daß in der Kammer (1, 23), in Flußrichtung des Trägergases hinter dem ausgeleuchteten Teil (14, 34) des Kammerinneren, ein vom Trägergas durchströmtes, größenselektives Teilchenfilter (10a, 10b, 20a, 20b, 44) vorgesehen ist, welches durch einen elektrischen Kondensator (20a, 20b) gebildet ist, zwischen dessen Elektroden (20a bzw. 20b) ein elektrisches Feld herrscht, das groß genug ist, um mindestens einen Teil der photoelektrisch aufgeladenen Teilchen auf der negativen Elektrode (20a) abzuscheiden und daß das elektrische Feld veränderlich ist, wobei ein mit den Elektroden (20a, 20b) des Kondensators in Wirkungsverbindung stehendes Steuergerät vorgesehen ist, das periodisch die Feldstärke des elektrischen Feldes zwischen zwei verschiedenen Werten umschaltet.

5. Vorrichtung nach einem der vorangehenden Ansprüche, dadurch gekennzeichnet, daß die Einrichtung (7) zur Neutralisierung des teilchenhaltigen Gases durch eine radioaktive Strahlungsquelle gebildet ist.

6. Vorrichtung nach einem der vorangehenden Ansprüche, dadurch gekennzeichnet, daß die UV-Lichtquelle (24) von einem strahlungsdurchlässigen, elektrisch leitenden Gitter (36) umgeben ist und daß das Gitter (36) an eine elektrische Gleichspannung angeschlossen ist, so daß zwischen dem Gitter (36) und der Kammerwand (23b) ein elektrisches Feld aufgebaut ist, welches groß genug ist, um mindestens einen Teil der photoelektrisch aufgeladenen Teilchen aus der Gasströmung zu beseitigen.

7. Vorrichtung nach einem der vorangehenden Ansprüche, dadurch gekennzeichnet, daß in der Kammer (3) eine Heizung (8) zur Erwärmung des teilchenbeladenen Gasstroms vorgesehen ist.

8. Vorrichtung nach Anspruch 7, dadurch gekennzeichnet, daß die Heizung durch die UV-Lichtquelle (4) gebildet ist.

9. Vorrichtung nach einem der Ansprüche 1 bis 8, dadurch gekennzeichnet, daß die UV-Lichtquelle (4, 24) eine Blitzlampe ist.

10. Vorrichtung nach einem der Ansprüche 1 bis 9, dadurch gekennzeichnet, daß ein mit der UV-Lichtquelle (4, 24) in Wirkungsverbindung stehendes Steuergerät vorgesehen ist, welches die UV-Lichtquelle (4, 24) periodisch ein- und ausschaltet.

11. Vorrichtung nach den Ansprüchen 9 und 10, dadurch gekennzeichnet, daß das Steuergerät die Blitzlampe periodisch zündet.

12. Vorrichtung nach Anspruch 4, 10 oder 11, dadurch gekennzeichnet, daß eine mit dem Strom- oder Ladungsmeßgerät (11a, 11b, 21) und dem Steuergerät verbundene Auswerteschaltungsanordnung vorgesehen ist, welche das Signal des Strom- oder Ladungsmeßgerät mit dem Steuersignal des Steuergerätes phasenempfindlich korreliert, aus dem resultierenden Ausgangssignal den zeitlichen Mittelwert bildet und diesen anzeigt und/oder speichert.

13. Vorrichtung nach einem der vorangehenden Ansprüche, dadurch gekennzeichnet, daß zwei oder mehr Sammelelektroden (10a und 10b bzw. 20a und 44) mit zugeordnetem Strom- oder Ladungsmeßgerät (11a und 11b bzw. 21 und 45) vorgesehen sind, wobei mindestens eine der Sammelelektroden als größenselektives Filter (10a bzw. 10b bzw. 44) oder als Diffusionsbatterie ausgebildet ist.

14. Vorrichtung nach Anspruch 13, dadurch gekennzeichnet, daß das größenselektive Filter (10a, 10b, 44) aus verknäuelten oder verwobenen Fasern oder Drähten besteht.

15. Vorrichtung nach einem der vorangehenden Ansprüche, dadurch gekennzeichnet, daß mindestens eine der gasdurchlässigen Lichtschleusen durch ein gebogenes, an dessen Innenwand zumindest annähernd reflexionsfrei ausgebildetes Rohr (37, 37b) gebildet ist.

16. Vorrichtung nach einem der vorangehenden Ansprüche, dadurch gekennzeichnet, daß mindestens eine der gasdurchlässigen Lichtschleusen aus elektrisch leitfähigem Material besteht und als elektrostatische Abschirmung dient.

17. Vorrichtung nach einem der vorangehenden Ansprüche, dadurch gekennzeichnet, daß die innere Wand der Kammer (1, 23b) im ausgeleuchteten Teil (14, 34) derselben aus einem mit einem Isolator beschichteten, elektrisch leitfähigen Material besteht, wobei die Isolatorschicht eine solch geringe Dicke hat, daß auf die Wand auftreffende elektrische Ladungen durch die Isolatorschicht hindurch in das elektrisch leitfähige Material wandern.

18. Vorrichtung nach einem der vorangehenden Ansprüche, dadurch gekennzeichnet, daß die UV-Lichtquelle (52) durch eine luftundurchlässige und mindestens teilweise für die Strahlung der Lichtquelle durchlässige Wand (54) von der Gasströmung getrennt ist.

## Claims

1. Apparatus for the quantitative and qualitative detection of hydrocarbon-containing suspended particles in gases with a closed chamber having a gas inlet and a gas outlet, with a UV-light source, which illuminates part of the interior of the chamber, said illuminated chamber part being separated from the remainder of the chamber interior by gas-permeable light traps, and with a device for the electrical neutralization of the particle-containing gas arranged in the vicinity of the gas inlet in the chamber interior, as well as with at least one collector electrode for charged particles connected to an electric current or charge meter and arranged in the vicinity of the gas outlet in the chamber interior, characterized in that the chamber (3, 23) is provided with a fan (9, 29), which produces an adjustable gas flow from the gas inlet (1, 21) through the chamber (3, 23) to the gas outlet (2, 22), that the collector electrode (10a, 10b, 20a, 44) is fixed by means of water-repelling insulators (12a, 12b, 22a, 22b, 46) to the chamber wall and is shielded by at least one electrostatic shield (13a, 13b, 27) from the UV-light source (4, 24) and the fan (9, 29), that the illuminated part (14, 34) of the chamber interior has at least partly an inner wall (5), which is connected to a clearly defined electrical potential and has a conductivity which is high enough of reducing to the clearly defined electrical potential the charge of the small ions resulting from the photoemission and which migrate to the inner wall and that the UV-light source radiates with photoenergies below the ionization energy of the carrier gas and above the work function of the particles.

2. Apparatus according to claim 1, characterized in that the UV-light source (4, 24) radiates with photoenergies below the ionization energy of air and above the work function of the particles.

3. Apparatus according to claim 2, characterized in that the UV-light source (4, 24) only radiates with wavelengths above 190 nm.

4. Apparatus according to one of the claims 1 to 3, characterized in that in the flow direction of the carrier gas behind the illuminated part (14, 34) of the chamber interior is provided in chamber (1, 23) a size-selective particle filter (10a, 10b, 20a, 20b, 44) through which flows the carrier gas and which is formed by an electrical capacitor (20a, 20b), between whose electrodes (20a or 20b) there is an electrical field, which is high enough to deposit at least part of the photoelectrically charged particles on the negative electrode (20a) and that the electrical field is variable, a control device operatively connected to the capacitor electrodes (20a, 20b) being provided, which periodically switches the field strength of the electrical field between two different values.

5. Apparatus according to one of the preceding claims, characterized in that the device (7) for neutralizing the particle-containing gas is formed by a radioactive radiation source.

6. Apparatus according to one of the preceding claims, characterized in that the UV-light source (24) is surrounded by a radiation-permeable, electrically conductive grid (36) and that the grid (36) is connected to an electrical direct current, so that between grid (36) and the chamber wall (23b) an electrical field is built up, which is large enough in order to eliminate at least part of the photoelectrically charged particles from the gas flow.

7. Apparatus according to one of the preceding claims, characterized in that the chamber (3) contains a heating means (8) for heating the particle-charged gas flow.

8. Apparatus according to claim 7, characterized in that the heating means is formed by the UV-light source (4).

9. Apparatus according to one of the claims 1 to 8, characterized in that the UV-light source (4, 24) is a flash lamp.

10. Apparatus according to one of the claims 1 to 9, characterized in that a control device operatively connected to the UV-light source (4, 24) is provided and periodically switches the UV-light source (4, 24) on and off.

11. Apparatus according to claims 9 and 10, characterized in that the control device periodically triggers the flash lamp.

12. Apparatus according to claims 4, 10 or 11, characterized in that an evaluating circuit means connected to the current or charge meter (11a, 11b, 21) and the control device is provided, which correlates in phase-sensitive manner with the control signal of the control device the signal of the charge or current meter, from the resulting output signal forms the time mean value and indicates and/or stores the same.

13. Apparatus according to one of the preceding claims, characterized in that two or more collector electrodes (10a, 10b or 20a, 44) with associated current or charge meter (11a, 11b or 21, 45) are provided and at least one of the collector electrodes is constructed as a size-selective filter (10a, 10b, 44) or as a diffusion battery.

14. Apparatus according to claim 13, characterized in that the size-selective filters (10a, 10b, 44) comprise interwoven or tangled fibres or wires.

15. Apparatus according to one of the preceding claims, characterized in that at least one of the gas-permeable light traps is formed by a bent tube (37a, 37b) constructed in at least partly non-reflecting manner on its inner wall.

16. Apparatus according to one of the preceding claims, characterized in that at least one of the gas-permeable light traps is made from electrically conductive material and serves as an electrostatic shield.

17. Apparatus according to one of the preceding claims, characterized in that the inner wall of chamber (1, 23b) is made in the illuminated part (14, 34) thereof from an electrically conductive material coated with an insulator, the insulating coating having a thickness such that electric charges striking the wall migrate through the insulating coating into the electrically conductive material.

18. Apparatus according to one of the preceding claims, characterized in that the UV-light source (52) is separated from the gas flow by a light-impermeable wall (54), which is at least partly permeable for the radiation of the light source.

## Revendications

1. Dispositif pour la détermination quantitative et qualitative de particules contenant des hydrocarbures, en suspension dans des gaz, comportant une chambre fermée, qui possède une entrée et une sortie pour le gaz, et comportant une source de lumière ultraviolette qui éclaire une partie de l'intérieur de la chambre, cette partie éclairée de la chambre étant séparée du reste de l'intérieur de la chambre par des sas pour la lumière, laissant passer le gaz, vis-à-vis du reste de l'intérieur de la chambre, et comportant un dispositif disposé au voisinage de l'entrée du gaz à l'intérieur de la chambre et servant à réaliser la neutralisation électrique du gaz contenant les particules, ainsi qu'au moins une électrode collectrice disposée au voisinage de la sortie du gaz à l'intérieur de la chambre, servant à collecter les particules chargées et raccordée à un appareil de mesure du courant ou de la charge électrique, caractérisé en ce que la chambre (3, 23) est munie d'un ventilateur (9, 29), qui produit un courant de gaz réglable traversant la chambre (3, 23) depuis l'entrée (1, 21) du gaz jusqu'à la sortie (2, 22) du gaz, que l'électrode collectrice (10a, 10b, 20a, 44) est fixée à la paroi de la chambre au moyen d'isolants hydrophobes (12a, 12b, 22a, 22b, 46) et est protégée par au moins un écran électrostatique (13a, 13b, 27) vis-à-vis de la source de lumière ultraviolette (4, 24) et vis-à-vis du ventilateur (9, 29), que la partie éclairée (14, 34) de l'intérieur de la chambre possède au moins en partie une paroi intérieure (5), qui est placée à un potentiel électrique défini et possède une conductivité suffisamment élevée pour évacuer la charge des petits ions, produits par la photoémission, qui traversent la paroi intérieure, au potentiel électrique défini et que la source de lumière ultraviolette réalise une émission avec des énergies optiques inférieures à l'énergie d'ionisation du gaz porteur et supérieures au travail d'extraction des particules.

2. Dispositif selon la revendication 1, caractérisé en ce que la source de lumière ultraviolette (4, 24) émet avec des énergies optiques inférieures à l'énergie d'ionisation de l'air et supérieures au travail d'extraction des particules.

3. Dispositif selon la revendication 2, caractérisé en ce que la source de lumière (4, 24) émet uniquement avec des longueurs d'onde supérieures à 190 nm.

4. Dispositif suivant l'une des revendications 1 à 3, caractérisé par le fait que dans la chambre (1, 23) il est prévu, dans la direction d'écoulement du gaz porteur, en arrière de la partie éclairée (14, 34) de l'intérieur de la chambre, un filtre (10a, 10b, 20a, 20b, 44) de retenue des particules, qui est traversé par le gaz porteur, est sélectif du point de vue de la taille des particules et est formé par un condensateur électrique (20a, 20b), entre les électrodes (20a, 20b) duquel règne un champ électrique suffisamment intense pour provoquer le dépôt d'au moins une partie des particules chargées par voie photoélectrique sur l'électrode négative (20a), et que le champ électrique est modifiable, auquel cas il est prévu un appareil de commande relié selon une liaison active aux électrodes (20a, 20b) du condensateur et commutant périodiquement l'intensité du champ électrique entre deux valeurs différentes.

5. Dispositif suivant l'une des revendications précédentes, caractérisé par le fait que le dispositif (7) servant à neutraliser le gaz contenant des particules est formé par une source de rayonnement radioactif.

6. Dispositif selon l'une des revendications précédentes, caractérisé en ce que la source de lumière ultraviolette (24) est entourée par une grille électriquement conductrice (36), transparente pour le rayonnement, et que la grille (36) est placée à une tension électrique continue de sorte qu'entre la grille (36) et la paroi (23b) de la chambre il s'établit un champ électrique suffisamment intense pour éliminer au moins une partie des particules chargées par voie photoélectrique hors du courant de gaz.

7. Dispositif selon l'une des revendications précédentes, caractérisé en ce qu'un dispositif de chauffage (8) servant à chauffer le courant de gaz chargé de particules est prévu dans la chambre (3).

8. Dispositif selon la revendication 7, caractérisé en ce que le dispositif de chauffage est formé par la source de lumière ultraviolette (4).

9. Dispositif selon l'une des revendications 1 à 8, caractérisé en ce que la source de lumière ultraviolette (4, 24) est une lampe éclair.

10. Dispositif selon l'une des revendications 1 à 9, caractérisé en ce qu'il est prévu un appareil de commande relié selon une liaison active à la source de lumière ultraviolette (4, 24) et branchant et débranchant périodiquement la source de lumière ultraviolette (4, 24).

11. Dispositif selon les revendications 9 ou 10, caractérisé en ce que l'appareil de commande allume périodiquement la lampe éclair.

12. Dispositif selon la revendication 4, 10 ou 11, caractérisé en ce qu'il est prévu un circuit d'évaluation, qui est relié à l'appareil (11a, 11b, 21) de mesure du courant ou de la charge et à l'appareil de commande et met en corrélation le signal de l'appareil de mesure du courant et de la charge et le signal de commande de l'appareil de commande, d'une manière sensible du point de vue de la phase, forme la moyenne dans le temps du signal de sortie obtenu et affiche et/ou mémorise cette moyenne.

13. Dispositif selon l'une des revendications précédente, caractérisé en ce qu'il est prévu deux ou plusieurs électrodes collectrices (10a et 10b ou 20a et 44), auxquelles sont associés des appareils (11a et 11b ou 21 et 45) de mesure du courant ou de la charge, au moins l'une des électrodes collectrices étant réalisée sous la forme d'une filtre (10a ou 10b ou 44) sélective du point de vue des tailles ou sous la forme d'une batterie de diffusion.

14. Dispositif selon la revendication 13, caractérisé en ce que le filtre (10a, 10b, 44) actif du point de vue des tailles est constitué par des fibres ou des fils emmêlés ou tissés.

15. Dispositif selon l'une des revendications précédentes, caractérisé en ce qu'au moins l'un des sas pour la lumière, qui laissent passer le gaz, est formé par un tube coudé (37a, 37b), dont la paroi intérieure ne produit au moins approximativement pas de réflexions.

16. Dispositif selon l'une des revendications précédentes, caractérisé en ce qu'au moins l'un des sas pour la lumière, qui laissent passer le gaz, est réalisé en un matériau électriquement conducteur et sert d'écran électrostatique.

17. Dispositif selon l'une des revendications précédentes, caractérisé en ce que la paroi intérieure de la chambre (1, 23b) est constituée, dans la partie éclairée (14, 34) de la chambre, par un matériau électriquement conducteur recouvert d'un isolant, la couche isolante possédant une faible épaisseur telle que des charges électriques apparaissant sur la paroi se propagent à travers la couche isolante pour pénétrer dans le matériau électriquement conducteur.

18. Dispositif selon l'une des revendications précédentes, caractérisé en ce que la source de lumière ultraviolette (52) est séparée du courant de gaz par une paroi (54) imperméable à l'air et au moins partiellement perméable pour le rayonnement de la source de lumière.

Fig. 1

Fig. 2

Fig. 3

53   52   54   23b   34

EP 0 160 888 B1